# EUROPEAN PATENT APPLICATION

(11) **EP 4 769 988 A2**
(43) Date of publication of application: **01.07.2026**
(21) Application number: 26171745.8
(22) Date of filing: 21.01.2020
(51) Int. Cl.: H04L 1/00

(54) **A METHOD FOR UNIFIED UPLINK AND DOWNLINK BEAM INDICATION**

(62) Divisional of application: 20888206.8
(71) Applicant: ZTE Corporation, Shenzhen, Guangdong 518057 (CN)
(72) Inventor: GAO, Bo, Shenzhen, 518057 (CN); LU, Zhaohua, Shenzhen, 518057 (CN); YAO, Ke, Shenzhen, 518057 (CN); ZHANG, Shujuan, Shenzhen, 518057 (CN); HE, Zhen, Shenzhen, 518057 (CN)
(74) Representative: Vossius & Partner Patentanwälte Rechtsanwälte mbB

(57) **Abstract**

This document generally relates to unified beam indication and/or unified transmission frameworks for wireless communication. In some implementations, a first communication node, such as a mobile station, associates a least one of a power control parameter, a port parameter, or a first reference signal (RS) resource with a communication parameter set, where the communication parameter set comprises at least a second RS resource and at least a quasi co-location (QCL) type parameter. Also, the first communication node may transmit an uplink signal according to the communication parameter set and the association.

## Description

### TECHNICAL FIELD

This document is directed generally to unified beam indications and/or transmission frameworks for wireless communications.

### BACKGROUND

As the expense of wide or ultra-wide spectrum resources, the considerable propagation loss induced by the extremely high frequency becomes a noticeable challenge. To solve this, antenna array and beam-forming training technologies using massive multiple-input and multiple output (MIMO), e.g., up to 1024 antenna elements for one node, have been adopted to achieve beam alignment and obtain sufficiently high antenna gain. To keep low implementation cost while still benefit from antenna array, analog phase shifters become very attractive for implementing mmWave beam-forming, which means that the number of controllable phases is finite and the constant modulus constraints are placed on these antenna elements. Given the pre-specified beam patterns, the variable-phase-shift-based beam-forming training targets are implemented to identify the best pattern for subsequent data transmission generally, in the one-total radiated power (TRP) and one-panel case.

### SUMMARY

This document relates to methods, systems, and devices for unified beam indication and/or unified transmission frameworks for wireless communication.

In some implementations, a method for wireless communication is disclosed. The method may include associating, by a first communication node, a least one of a power control parameter, a port parameter, or a first reference signal (RS) resource with a communication parameter set, the communication parameter set comprising at least a second RS resource and at least a quasi co-location (QCL) type parameter; and transmitting, by the first communication node, an uplink signal according to the communication parameter set and the association.

In some other implementations, another method for wireless communication is disclosed. The method may include: transmitting, by a second communication node to a first communication node, a command to associate at least one of a power control parameter, a port parameter, or a first reference signal (RS) resource with a communication parameter set, the communication parameter set comprising at least a second RS resource and at least a quasi-co-location (QCL) type parameter; and receiving, from the first communication node, an uplink signal according to the communication parameter set and the association.

In some other implementations, a network device is disclosed. The network device may include one or more processors and one or more memories, wherein the one or more processors are configured to read computer code from the one or more memories to implement any one of the methods above.

In yet some other implementations, a computer program product is disclosed. The computer program product may include a non-transitory computer-readable program medium with computer code stored thereupon, the computer code, when executed by one or more processors, causing the one or more processors to implement any one of the methods above.

The above and other aspects and their implementations are described in greater detail in the drawings, the descriptions, and the claims.

### BRIEF DESCRIPTION OF THE DRAWINGS

FIG. 1 shows an example of a wireless communication system.
FIG. 2A shows an example of a general transmission framework for a mobile station of FIG. 1.
FIG. 2B shows an example of a unified transmission framework for the mobile station of FIG. 1.
FIG. 3 is a flow chart of an example of a wireless communication method.
FIG. 4 is a flow chart of another example of a wireless communication method.
FIG. 5 is a diagram illustrating aspects of the method of FIG. 4
FIG. 6 is a flow chart of another example of a wireless communication method.
FIG. 7 is a diagram illustrating aspects of the method of FIG. 6.
FIG. 8 is a flow chart of another example of a wireless communication method.
FIG. 9 is a diagram illustrating aspects of the method of FIG. 8.
FIG. 10 is a flow chart of another example of a wireless communication method.
FIG. 11 is a schematic diagram of a portion of an example downlink control information (DCI) command.

### DETAILED DESCRIPTION

The present description describes a unified beam indication framework for mobile communications between one or more mobile stations and a wireless access node. A unified beam indication framework allows or enables a mobile terminal to have a common set of communication parameters that the mobile terminal uses to communicate with the base station for control and data uplink transmissions and downlink receptions.

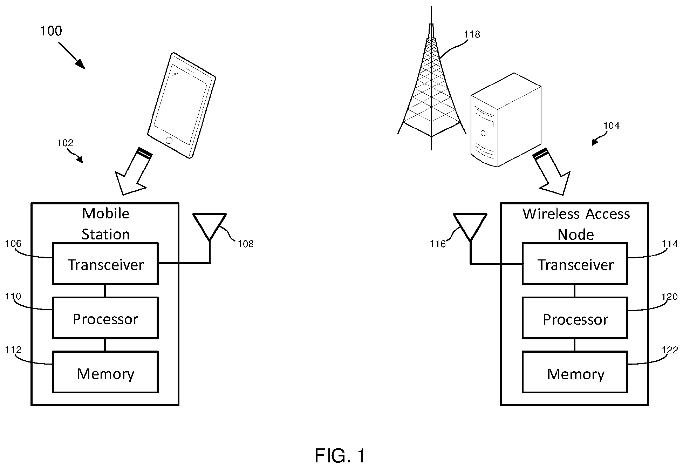

Fig. 1 shows a diagram of an example wireless communication system 100 including a plurality of communication nodes that are configured to wirelessly communicate with each other. The communication nodes include a mobile station 102 and a wireless access node 104. The example wireless communication system 100 in Fig. 1 is shown as including only one mobile station 102. However, various other numbers of mobile stations, including two or more mobile stations, may be possible for other configurations of the wireless communication system 100. Also, the number of mobile stations 102 communicating with the wireless access node 104 may vary over time.

The mobile station 102, which may comprise or otherwise be referred to as a mobile terminal or a user equipment (UE), and may be or include, but not limited to, a mobile phone, smart phone, tablet, laptop computer, or other mobile devices that are capable of communicating wirelessly over a network. The mobile station 102 may include transceiver circuitry 106 coupled to an antenna 108 to effect wireless communication with the wireless access node 104. The transceiver circuitry 106 may also be coupled to a processor 110, which may also be coupled to a memory 112 or other storage device. The memory 112 may store therein instructions or code that, when read and executed by the processor 110, cause the processor 110 to implement various ones of the methods described herein.

Similarly, the wireless access node 104 may comprise a base station or other wireless network access points capable of communicating wirelessly over a network with one or many mobile stations. For example, the wireless access node 104 may comprise a 4G LTE base station, a 5G NR base station, a 5G central-unit base station, a 5G distributed-unit base station, a next generation Node B (gNB), an enhanced Node B (eNB), or other base station, in various embodiments. The wireless access node 104 may include transceiver circuitry 114 coupled to an antenna 116, which may include an antenna tower 118 in various approaches, to effect wireless communication with the mobile station 102. The transceiver circuitry 114 may also be coupled to one or more processors 120, which may also be coupled to a memory 122 or other storage device. The memory 122 may store therein instructions or code that, when read and executed by the processor 120, cause the processor 120 to implement various ones of the methods described herein.

The mobile station 102 and the wireless access node 104 may be configured to wirelessly communicate with each other in or over a mobile network and/or a wireless access network according to one or more standards and/or specifications. In general, the standards and/or specifications may define the rules or procedures under which the mobile station 102 and the wireless access node 104 can wirelessly communicate, which may include those for communicating in millimeter (mm)-Wave bands, and/or with multi-antenna schemes and beamforming functions. In addition or alternatively, the standards and/or specifications are those that define a radio access technology and/or a cellular technology, such as Fourth Generation (4G) Long Term Evolution (LTE), Fifth Generation (5G) New Radio (NR), or New Radio Unlicensed (NR-U), as non-limiting examples.

In the wireless system 100, the mobile station 102 and the wireless access node 104 are configured to wirelessly communicate signals between each other. In general, a communication in the wireless system 100 between two communication nodes can be or include a transmission or a reception, and is generally both simultaneously, depending on the perspective of a particular node in the communication. For example, for a communication between a first node and a second node where the first node is transmitting a signal to the second node and the second node is receiving the signal from the first node, the communication may be considered a transmission for the first node and a reception for the second node.

Additionally, signals communicated between communication nodes in the system 100 may be characterized or defined as a data signal or a control signal. In general, a data signal is a signal that includes or carries data, such multimedia data (e.g., voice and/or image data), and a control signal is a signal that carries control information that configures the communication nodes in certain ways in order to communicate with each other, or otherwise controls how the communication nodes communicate data signals with each other. Also, particular signals can be characterized or defined as either an uplink (UL) signal or a downlink (DL) signal. An uplink signal is a signal transmitted from the mobile station 102 to the wireless access node 104. A downlink signal is a signal transmitted from the wireless access node 104 to the mobile station 102. Also, certain signals may defined or characterized by combinations of data/control and uplink/downlink, including uplink control signals, uplink data signals, downlink control signals, and downlink data signals.

For at least some specifications, such as 5G NR, an uplink control signal includes a physical uplink control channel (PUCCH), an uplink data signal includes a physical uplink shared channel (PUSCH), a downlink control signal includes a physical downlink control channel (PDCCH), and a downlink data signal includes a physical downlink control channel (PDCCH).

Also, some signals communicated in the system 100 may be defined or characterized as reference signals (RS). In general, a reference signal may be recognized in the system 100 as a signal other than a data signal or a control signal, although a reference signal may be an uplink reference signal or a downlink reference signal. Non-limiting examples of reference signals used herein, and as defined at least in 5G NR, include a demodulation reference signal (DM-RS), a channel-state information reference signal (CSI-RS), and a sounding reference signal (SRS). A DM-RS is used for channel estimation to allow for coherent demodulation. For example, a DMRS for a PUSCH transmission allows the wireless access node 104 to coherently demodulate the PUSCH. A CSI-RS is a downlink reference signal used by the mobile station 102 to acquire downlink channel state information (CSI). A SRS is an uplink reference signal transmitted by the mobile station 102 and used by the wireless access node 104 for uplink channel-state estimation.

Additionally, a signal may have an associated resource that, in general, provides or identifies time and/or frequency characteristics for transmission of the signal. An example time characteristic is a temporal positioning of a smaller time unit over which the signal spans, or that the signal occupies, within a larger time unit. In certain transmission schemes, such as orthogonal frequency-division multiplexing (OFDM), a time unit can be a sub-symbol (e.g., a OFDM sub-symbol), a symbol (e.g., a OFDM symbol), a slot, a sub-frame, a frame, or a transmission occasion. An example frequency characteristic is a frequency band or a sub-carrier in or over which the signal is carried. Accordingly, as an example illustration, for a signal spanning N symbols, a resource for the signal may identify a positioning of the N symbols within a larger time unit (such as a slot) and a subcarrier in or over which the signal is carried.

In addition, for at least some example configurations, a RS resource is of a first type or of a second type. A first type of RS resource may be referred to as a reference RS resource. A reference RS resource is a RS resource used with a second type of RS resource, referred to as a target RS resource or a target channel resource, to provide a spatial relation (or spatial relation information) for a target RS or a target channel. A target RS or a target channel is a signal to be communicated or transmitted between two communication nodes. Also, a spatial relation between a target RS or channel and a reference RS identifies a spatial feature that is the same or quasi co-located between the target RS or channel and the reference RS. Example spatial features include a beam, a spatial parameter, or a spatial filter (also referred to as a spatial domain filter). A spatial feature can be either on the mobile terminal side (e.g., UE-side) or on the base station side (e.g., gNB-side). In various embodiments, a reference RS can be a downlink (DL) signal, such as a synchronization signal (SS) block or a CSI-RS, or an uplink (UL) signal, such as a SRS.

In the present description, when implemented in accordance with a unified beam indication framework, the mobile station 102 includes, stores, has access to, is configured with, and/or is configured to generate one or more communication parameter sets. In general, a communication parameter set (CPS) is a set of one or more parameters that a mobile station uses to communicate signals, including transmit signals and receive signals. In at least some embodiments, some or all of the parameters are defined by and/or used in accordance with 5G NR. In addition or alternatively, a CPS comprises one or more quasi co-location (QCL) states, and further, is associated with (such as by including, being linked with, identifying, and/or indicating) and at least one of: one or more power control parameters, one of more port parameter, or one or more reference signal (RS) resources.

Additionally, in various embodiments, a CPS includes, is associated with, and/or comprises one or more transmission configuration indicator (TCI) states, a spatial relation (also referred to as spatial relation information), one or more reference signals (RS), one or more spatial filters, and/or one or more sets of pre-coding information. Also, for at least some embodiments, a TCI state is the same as, or equivalent to, a TCI codepoint or a QCL state. Also, for at least some embodiments, a CPS is the same as, or equivalent to, a TCI state.

In addition, as used herein, a QCL state is a set of one or more RS resources and a corresponding set of one or more QCL-type parameters. Additionally, QCL-type parameters include Doppler spread, Doppler shift, delay spread, average delay, average gain, or a spatial parameter. Also, a QCL type-D parameter is the same as, or equivalent to, a spatial parameter or a spatial receiver (Rx) parameter.

Also, a power control parameter includes at least one of: target power (also referred to as P0), a path loss RS, a scaling factor for path loss (also referred as an alpha), or a closed loop process. For at least some example configurations, the path loss is a couple loss. Additionally, the mobile station 102 may use different or multiple power control parameters for different or multiple types of signal transmission. For example, the mobile station 102 may use an uplink data power control parameter for an uplink data transmission (e.g., a PUSCH power control parameter for a PUSCH transmission), an uplink control power control parameter for an uplink control transmission (e.g., a PUCCH power control parameter for a PUCCH transmission), and/or an uplink RS power control parameter for an uplink RS transmission (e.g., a SRS power control parameter for a SRS transmission). As used herein, and unless specified otherwise, the term "power control parameter" can include a power control parameter for one type of transmission or multiple types of transmission.

Addition, a port parameter includes at least one of: a number of one or more ports, a mapping between the one or more ports and one or more reference signal (RS) ports; a set of candidate transmit precoder matrix indicators (TPMI), a number of transmission layers for a channel, or one or more sounding reference signal (SRS) resources for a channel.

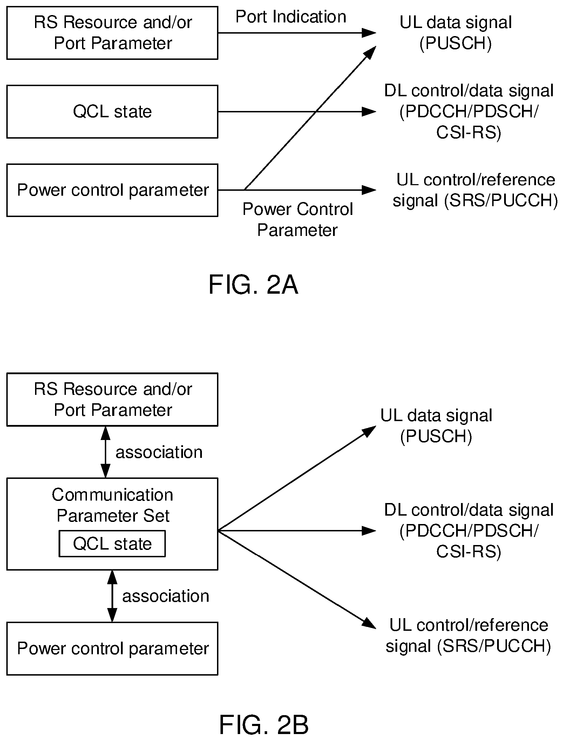

Fig. 2A shows a diagram of a general transmission framework for the mobile station 102, which indicates the parameters that the mobile station is to determine to transmit an uplink signal or receive a downlink signal. As shown in Fig. 2A, when the mobile station 102 is to transmit a target uplink data signal (e.g., a PUSCH), the mobile station 102 is to determine a port indication for the target uplink data signal that indicates one or more uplink data ports at which to transmit the target uplink data signal, and a power control parameter. The mobile station 102 may determine the port indication based on a RS resource (e.g., a SRS resource, or a reference RS resource) and/or a port parameter. In addition, when the mobile station 102 is to transmit an uplink reference signal (e.g., a SRS) or an uplink control signal (e.g., a PUCCH), the mobile station 102 may determine a power control parameter. Also, when the mobile station 102 is to receive a down link control, data, or reference signal (e.g., a PDCCH, PDSCH, or CSI-RS), the mobile station 102 may determine a QCL state. Upon determining the pertinent parameters (RS resource, port parameter, QCL state, and/or power control parameter), the mobile station 102 may then transmit or receive a target uplink or downlink control/data/reference signal according to the determined parameters.

Fig. 2B shows a diagram of a unified transmission framework for the mobile station 102. The unified transmission framework is implemented by configuring the mobile station 102 with one or more communication parameter sets. The one or more communication parameter sets provide a common set or group of parameters that the mobile station 102 uses to perform both uplink and downlink transmissions. Accordingly, as shown in Fig. 2B, a communication parameter set that includes a QCL state that includes a second RS resource and one or more corresponding QCL parameters, is further associated with at least one of a first RS resource, a port parameter, or a power control parameter. When the association is made, the mobile station may transmit or receive one or more uplink data or control signals and/or one or more downlink data or control signals (e.g., any or all of PUSCH, PDCCH, PDSCH, CSI-RS, SRS, PUCCH) according to the communication parameter set.

Such a unified transmission framework may be desirable for situations where configuring the mobile station 102 for uplink and downlink communications separately is not necessary. For such situations, configuring the mobile station 102 with the unified transmission framework, rather than doing so separately for UL and DL communications, may reduce the overhead and signaling required to configure the mobile station 102 for both UL and DL communications. Additionally, the unified framework leverages spatial relation information, which supports beam indication for uplink control channel and reference signal transmissions (e.g., PUCCH and SRS), and beam indication for uplink data channels (e.g. PUSCH), which may be achieved through mapping between one or more SRS resources indicated by the wireless access station 104 and antenna ports of the uplink data channels. As a result, beam configurations for uplink data channels may be derived from the spatial relation information and mapping information between RS resources and RS antenna ports.

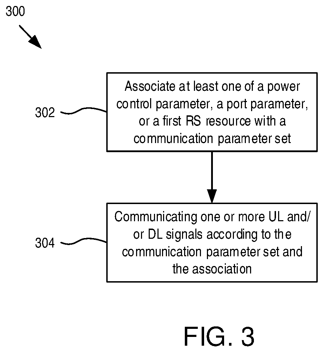

Fig. 3 shows an example method 300 for wireless communication. For at least some embodiments, the method 300 is performed with the mobile station 102 of Fig. 1. At block 302, the mobile station 102 associates at least one of a power control parameter, a port parameter, or a first RS resource with a communication parameter set, where the communication parameter set comprises at least a second RS resource and a QCL type parameter. The mobile station 102 may perform the association in any of various ways. For example, the communication parameter set may be a data structure to which the mobile station 102 has access, such as by storing the communication parameter set in its memory 112 or by having access to the communication parameter set stored in a remove storage location. The data structure may have a plurality of entries, and the mobile station 102 may perform the association by including the power control parameter, the port parameter, and/or the first RS resource in one or more entries of the data structure. In addition or alternatively, the mobile station 102 may include identifiers (ID) that uniquely identify the power control parameter, the port parameter, and/or the first RS resource in the communication parameter set, or may otherwise link the IDs with the communication parameter set. In addition or alternatively, the communication parameter set may have an identifier, and the mobile station 102 may link the communication parameter set ID with the power control parameter, the port parameter, the first RS resource, and/or their respective IDs. Various ways of performing the association may be possible such that once the association is made, the mobile station 102 can identify the power control parameter, the port parameter, and/or the first RS resource upon identifying the associated communication parameter set.

Also, for at least some example methods, the mobile station 102 may be configured with the communication parameter set, or otherwise be able to determine or identify the communication parameter set, prior to the association. For example, the mobile station 102 may receive one or more commands, such as from the wireless access node 104, that configures the mobile station 102 with the communication parameter set or otherwise allows the mobile station 102 to determine the communication parameter set. An example command may be a radio resource control (RRC) command, a medium access control control element (MAC-CE) command, although other types of commands may be possible. For at least some example methods where the mobile station 102 receives a MAC-CE command to determine the communication parameter set, the MAC-CE command is configured for PDSCH transmission configuration indication (TCI) activation. Also, for at least some methods where the mobile station 102 receives a DCI command to determine the communication parameter set, the DCI command may comprise a DCI format 1_1, a DCI format 0_1, or a group common DCI command.

In addition, for at least some example methods, the associating at block 302 may be performed in response to one or more association commands, such as one or more RRC commands or MAC-CE commands. In various embodiments, the mobile station 102 receives the one or more commands from the wireless access node 104.

Also, for at least some example methods, the first RS resource may be a reference RS resource, and/or include a synchronization signal (SS) block, a channel-state information reference signal (CSI-RS) resource, or a sounding reference signal (SRS) resource.

At block 304, the mobile station 102 may communicate one or more uplink signals and/or one or more downlink signals with the wireless access node 104 according to the communication parameter set and the association performed at block 302. The communication(s) may include one or more transmissions and/or one or more receptions. Accordingly, at block 304, the mobile station 102 may transmit one or more uplink signals (e.g., a SRS, a PUCCH, or a PUSCH) to the wireless access node 104, or may receive one or more downlink signals (e.g., a PDCCH, a PDSCH, or a CSI-RS) from the wireless access node 104.

Additionally, for at least some example methods, the mobile station 102 may determine a transmission scheme based on the parameters in the communication parameter set it determines at block 302 in order to transmit or receive a signal at block 304. The mobile station 102 may then transmit or receive a signal according to the transmission scheme. In particular, if the mobile station 102 is to transmit an uplink signal, the mobile station 102 may determine an uplink transmission scheme, which may include at least one of: spatial relation information, power control parameters, one or more RS resources, or port parameters. In particular embodiments, the mobile station 102 may determine the RS resource(s) and/or the port parameter(s) only for some of the uplink signal transmissions, such as only for PUSCH. The mobile station 102 may then transmit the uplink signal according to the transmission scheme. Additionally, if the mobile station 102 to receive a downlink signal, the mobile station 102 may determine a downlink transmission scheme, which may include one or more RS resources included in a QCL state and associated QCL type parameters. The mobile station 102 may then receive the downlink signal according to the downlink transmission scheme.

For at least some example methods and/or embodiments, the mobile station 102 receives a downlink (DL) signal according to a communication parameter set, which comprises at least a reference RS and at least a QCL parameter type. In response, the mobile station 102 may estimate the corresponding QCL parameter type (e.g., Doppler shift or spatial parameter, which is also called as Rx beam) by receiving the reference RS. Then, the base station 102 uses the estimated value (e.g., Doppler shift value or Rx beam) to receive or demodulate the DL signal.

For at least some other methods and/or embodiments, the mobile station 102 transmits an uplink (UL) signal according to a communication parameter set (which comprises at least a reference RS and at least QCL parameter type) a power control parameter and port parameter. Specifically, the UE shall estimate the DL Rx beam according to the reference RS with regard to spatial parameter. Then, the UE shall use the UL Tx beam corresponding to the DL Rx beam to transmit the UL signal. The transmit power of the UL signal is configured by the power control parameter, and the number of ports of the UL signal (if the UL signal comprises PUSCH) is determined by the configured value in the power parameter.

Also, for example methods where the communication is an uplink control signal transmission (e.g., PUCCH) or an uplink RS transmission (e.g., SRS), the mobile station 102 may ignore an association between the communication parameter set and the first RS resource. In addition or alternatively, for example methods where the transmission is an uplink data transmission (e.g., a PUSCH transmission), the mobile station may transmit the uplink data signal at one or more ports corresponding to the port parameter. For such example methods, the port parameter may include a number of ports, such as a number of uplink data ports or PUSCH ports.

Additionally, for example methods where the communication at block 304 is an uplink data transmission (e.g., a PUSCH transmission), the mobile station 102 determines at least one of: an entry or a precoding of an indicated transmitted precoding matrix indicator (TPMI), a number of bits of a precoding information and number of layers field, or a scaling factor for PUSCH transmission power.

In addition, for at least some example methods, the first RS resource associated with the communication parameter set includes a SRS resource having an associated SRS resource identifier (ID). For at least some of these example methods, the mobile station 102 performs at least one of the following actions: the mobile station 102 includes the SRS resource ID in the communication parameter set; the mobile station 102 receives a RRC command or a MAC-CE command that identifies an association between the SRS resource and the communication parameter set; the mobile station 102 determines the SRS resource according to the second RS resource being the same between the communication parameter set and a spatial relation, or between the communication parameter set and a second communication parameter set of the SRS resource; or, where the communicated signal is an uplink data signal (e.g., a PUSCH), the mobile station 102 determines the SRS resource according to a same communication parameter set between the uplink signal and the SRS resource. The mobile station 102 may associate the communication parameter set with SRS resource according to at least one of these actions.

In addition, for some example methods where the first RS resource includes a SRS resource, the SRS resource is configured with a usage of codebook or non-codebook. For other example methods, where the SRS resource is not configured with the usage of codebook or non-codebook, the SRS resource is configured with a usage other than codebook or non-codebook, such as beamManagement or antennaSwitching, as non-limiting examples. For at least some embodiments, usage is a RRC parameter defined in accordance with 5G NR specifications.

In addition, for at least some example methods, where the mobile station 102 is to transmit an uplink control signal (e.g., a PUCCH) or a SRS, the mobile station 102 may determine at least one of a spatial relation or the power control parameter of the uplink signal according to the communication parameter set. For at least some of these methods, the PUCCH includes a PUCCH resource or a PUCCH resource group that includes a plurality of PUCCH resources. In addition, for at least some example methods, the mobile station 102 determines the spatial relation of the uplink signal according to the second RS resource or the communication parameter set.

Additionally, for at least some example methods, where the mobile station 102 is to transmit an uplink data signal (e.g., a PUSCH), the mobile station 102 may determine at least one of a spatial relation, a SRS resource, the port parameter, or the power control parameter of the uplink signal according to the communication parameter set. For at least some of these methods, the mobile station 102 determines a mapping between one or more PUSCH ports and one or more SRS ports of the at least one SRS resource of the communication parameter set. In addition or alternatively, the mobile station 102 includes the port parameter for transmitting the PUSCH in the communication parameter set, wherein the communication parameter set does not comprise the SRS resource.

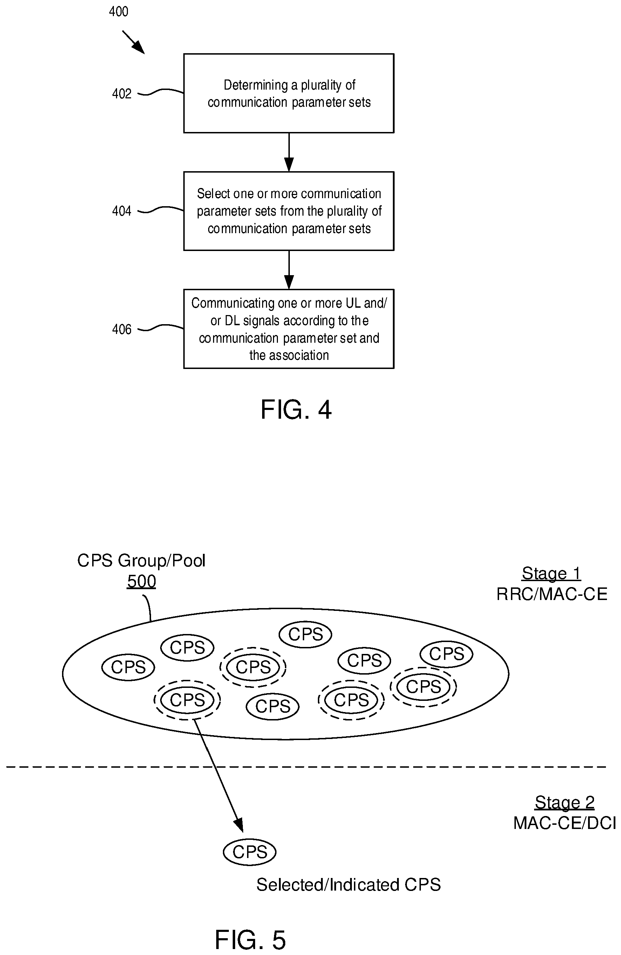

Fig. 4 shows another example method 400 for wireless communication. The example method 400 is also described with reference to Fig. 5, which shows a diagram illustrating selection of a communication parameter set in two stages. At block 402, the mobile station 102 may determine a plurality of communication parameter sets. Each communication parameter set may include a second RS resource and at least a QCL type parameter, as previously described with reference to Fig. 3. In addition, at least one of the communication parameter sets is associated with at least one of a power control parameter, a port parameter, or a first reference RS source, as previously described. For at least some example methods, such as shown in Fig. 5, the plurality of communication parameter sets (CPS) may be considered part of a same group or a same pool 500. Also, for at least some example methods, one or more communication parameter sets of the plurality comprises a combination of one or more communication parameter sets. A combination may be a single set or collection of parameters that were previously part of two or more communication parameter sets, or may be considered a method or special state/entry, and consequently, may be a special configuration case that has only one communication parameter set but still qualifies as a combination. That is, in certain (e.g., special configuration) situations, the mobile station 102 may determine a communication parameter set to be a combination, and/or the wireless access node 104 may configure the mobile station 102 to determine a communication parameter set as a combination, even though that determined combination, in actuality, includes only one communication parameter set, and not two or more communication parameter sets. For example, the mobile station 102 may determine a plurality of combinations, but at least one of those combinations that the mobile station 102 determines includes only one communication parameter set. For such situations, that communication parameter set may still be recognized as a combination.

In addition, the mobile station 102 may be able to determine the plurality of communication parameter sets in various ways. For example, the mobile station 102 may store the plurality of communication parameter sets in its memory 112, or may have access to a remote storage that stores the plurality of communication parameter sets, as non-limiting examples. In addition or alternatively, the mobile station 102 may determine the plurality of communication parameter sets by identifying IDs that uniquely identify the communication parameter sets. In addition or alternatively, the mobile station 102 may determine the plurality of communication parameter sets in response to receiving a command, such as a RRC command or a MAC-CE command, as non-limiting examples.

At block 404, the mobile station 102 may select or activate one or more communication parameter sets. For at least some example methods, the mobile station 102 may select the one or more communication parameter sets in response to a command, such as a DCI command or a MAC-CE command, as non-limiting examples. At block 406, the mobile station 102 may communicate, such as by transmitting and/or receiving, one or more uplink signals, and/or one or more downlink signals, according to the selected communication parameter set and the selected communication parameter set's association with at least one of a power control parameter, a port parameter, or a RS resource.

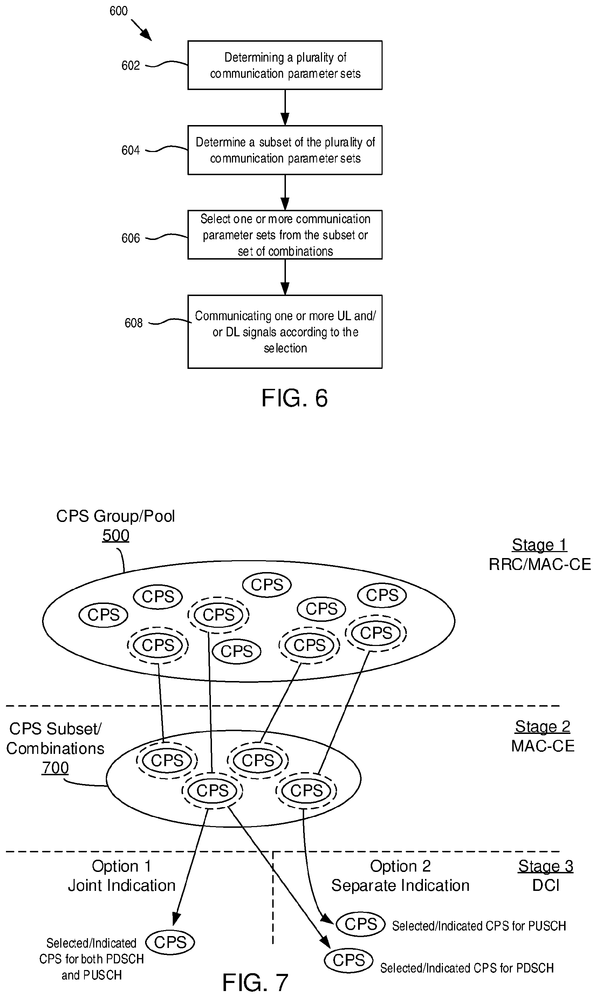

Fig. 6 shows another example method 600 for wireless communication. The example method 600 is also described with reference to Fig. 7, which shows a diagram illustrating selection of a communication parameter set in three stages. At block 602, the mobile station 102 may determine a plurality of communication parameter sets (e.g., a group or pool of communication parameter sets 500), such as previously described at block 402. The mobile station 102 may determine the plurality of communication parameter sets in response to a command, such as a RRC command, for example.

At block 604, the mobile station 102 may determine a subset (e.g., subset 700 in Fig. 7) of the plurality of communication parameter sets. The mobile station 102 may determine the communication parameter set(s) making up the subset 700 in response to a command, such as a MAC-CE command for example. For at least some example methods, the mobile station 102 may identify the communication parameter sets in the subset 700 as being activated or indicated to use for communicating uplink and downlink signals. Also, for at least some example methods, the mobile station 102 may deactivate one or more communication parameter sets, rendering them unavailable for use for communicating uplink and downlink signals. The mobile station 102 may deactivate a communication parameter set if it wants to activate more communication parameter sets than a predetermined maximum. Accordingly, the mobile station 102 may deactivate one or more previously activated communication parameter sets in order to activate all of the ones its wants to. In addition or alternatively, one or more communication parameter sets in the subset 700 may be a combination of two or more communication parameter sets in the plurality (e.g., the CPS group or pool 500 in Fig. 7).

For at least some example methods, each communication parameter set in the subset is associated with a respective one of a plurality of indexes. For such methods, the mobile station 102 may receive a physical downlink control channel (PDCCH), a physical downlink shared channel (PDSCH), or a channel-state information reference signal (CSI-RS) according to a communication parameter set having an index that matches a predetermined index of a plurality of indexes. For at least some of these methods, the predetermined entry includes a lowest index or a highest index of the plurality of indexes. In addition or alternatively, a scheduling offset of the PDSCH is less than or equal to a threshold, and/or a scheduling offset of the CSI-RS is less than or equal to a threshold.

In addition or alternatively, where each communication parameter set in the subset is associated with a respective one of a plurality of indexes, the mobile station 102 transmits a physical uplink control channel (PUCCH), or a sounding reference signal (SRS) according to a communication parameter set or a combination having an index that matches a predetermined index. For at least some of these methods, the predetermined index comprises a lowest index or a highest index of the plurality of indexes. Also, for at least some of these methods, the PUCCH is not configured with a spatial relation parameter or a path loss RS parameter, or the SRS is not configured with the spatial relation parameter or the path loss RS parameter.

At block 606, the mobile station 102 may select one or more communication parameter sets from the subset 700 to use to communicate one or more uplink signals and/or one or more downlink signals. Also, for at least some methods, the mobile station 102 may select the one or more communication parameter sets in response to a command, such as a DCI command for example. As indicated in Fig. 7, the mobile station 102 may be configured to use the communication parameter sets in the subset 700 for uplink data (e.g., PUSCH) and downlink data (e.g., PDSCH) transmission in different ways. In one way (Option 1 in Fig. 7), the mobile station 102 may use one (or the same) selected communication parameter set for both an uplink data transmission and a downlink data transmission. In a second way (Option 2 in Fig. 7), the mobile station 102 may use different selected communication parameter sets for different uplink and downlink data transmissions. That is, the mobile station may use a first selected communication parameter set for an uplink data transmission, and a second selected communication parameter set for a downlink data transmission.

In addition or alternatively, for at least some example methods where the uplink signal includes a PUSCH, the mobile station 102 selects a second communication parameter set from the subset for receiving a physical downlink shared channel (PDSCH), and receives the PDSCH according to the second communication parameter set. For at least some of these methods, the first communication parameter set and the second communication parameter set are the same, and the mobile station 102 selects the second communication parameter set in response to the selection command. In addition, for example methods where the subset includes a plurality of combinations and the uplink signal is a PUSCH, the mobile station 102 may select a second combination from the subset for receiving a physical downlink shared channel (PDSCH), and then receive the PDSCH according to the second combination. For at least some of these methods, the first combination and the second combination are the same, and the mobile station 102 selects the second combination in response to a command, such as a DCI command for example.

At block 608, the mobile station may communicate one or more uplink signals and/or one or more downlink signals according to the selected one or more communication parameter sets from the subset.

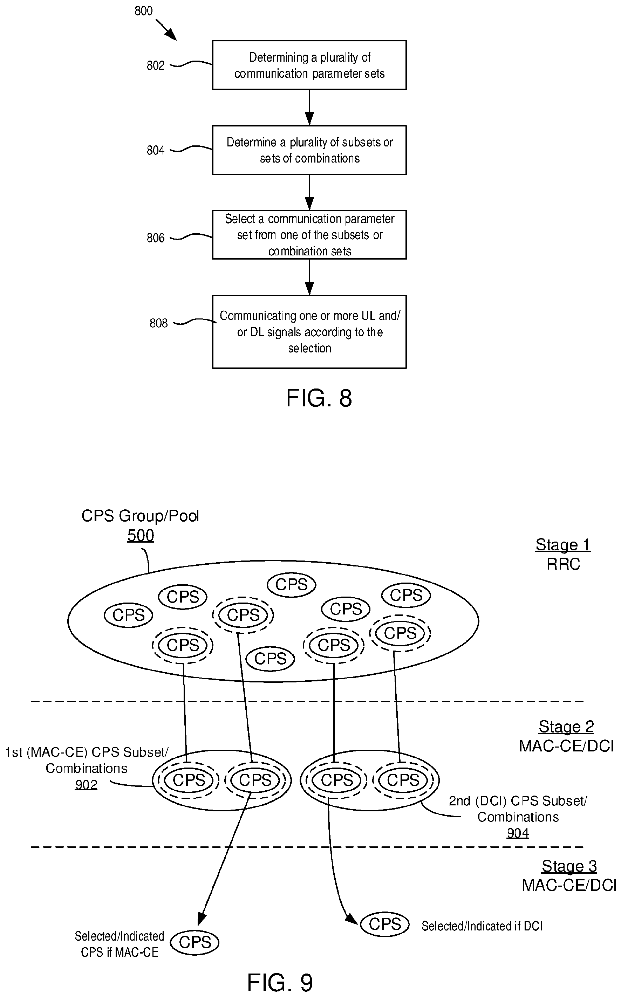

Fig. 8 shows another example method 800 for wireless communication. The example method 800 is also described with reference to Fig. 9, which shows a diagram illustrating selection of a communication parameter set in three stages. At block 802, the mobile station 102 may determine a plurality of communication parameter sets (e.g., a group or pool of communication parameter sets 500), such as previously described at blocks 402, 602. The mobile station 102 may determine the plurality of communication parameter sets in response to a command, such as a RRC command, for example. At block 804, the mobile station 102 may determine a plurality of subsets (e.g., subsets 902, 904 in Fig. 9) of the plurality of communication parameter sets. The mobile station 102 may determine the communication parameter set(s) making up the subsets 902, 904 in response to one or more commands, such as a MAC-CE command or a DCI command, for example. As shown in Fig. 9, the mobile station 102 may group communication parameter sets in the same subset by associating them with the same command or command type. For example, one or more communication parameter sets associated with MAC-CE commands may be part of the same first subset 902, and one or more communication parameter sets associated with DCI commands may be part of the same second subset 904. Also, for at least some methods, one or more of the communication parameter sets of the first subset 902 and/or one or more of the communication parameter sets of the second subset 904 may be a combination of two or more parameter sets from the group/pool 500.

At block 806, the mobile station 102 may select one or more communication parameter sets from the first subset 902 or the second subset 904 to use to communicate one or more uplink signals and/or one or more downlink signals. Which communication parameter set(s) the mobile station 102 selects may depend on a command or a type of command that the mobile station 102 receives. That is, the mobile station 102 may select a communication parameter set from a subset associated with a command type that matches the type of the command that the mobile station 102 receives. For example, at block 806, if the mobile station 102 receives a MAC-CE command, then the mobile station 102 may select a communication parameter set from the first subset 902, and if the mobile station 102 receives a DCI command, then the mobile station may select a communication parameter set from the second subset 904. At block 808, the mobile station may communicate one or more uplink signals and/or one or more downlink signals according to the selected one or more communication parameter sets from one of the subsets.

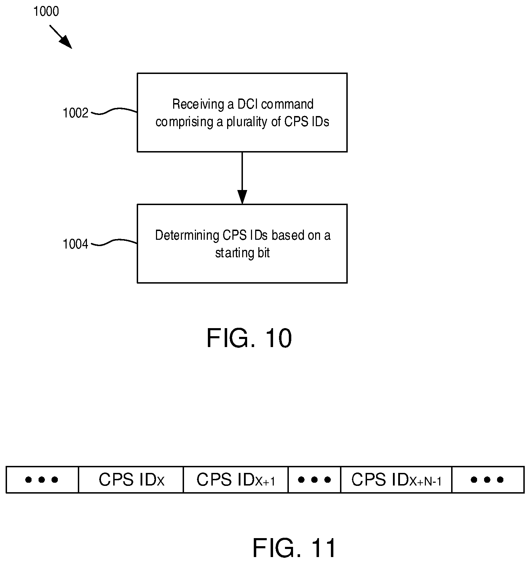

Fig. 10 shows another example method 1000 for wireless communication. The example method 1000 may be performed by the mobile station 102 in isolation, or in combination with one of the other example methods described with reference to Figs. 3-9. For at least some embodiments, the method 1000 may be performed where the mobile station 102 is part of a plurality or a group of mobile stations sharing the same or similar channel properties. A non-limiting example may be a plurality of mobile stations located on the same high-speed train. For such embodiments, the mobile station 102 may be configured with a specific radio network temporary identifier (RNTI), such as in accordance with 5G NR. At block 10002, the mobile station 102 may receive a DCI command. For at least some example methods, the DCI command is scrambled (e.g., cyclic redundancy checked (CRC) scrambled) with the specific RNTI. The group common DCI command itself may include a plurality of IDs identifying a plurality communication parameter sets. Fig. 11 is a schematic diagram of a part of a group common DCI command including a plurality of communication parameter set IDs (CPS IDs). At block 1004, in response to the mobile station 102 receiving the DCI command, the mobile station 102 may determine the communication parameter set IDs based on an index (e.g., a starting bit) identifying a position for the plurality of communication parameter set IDs in the DCI command, or a number of the plurality of communication parameter set IDs.

Additionally, for at least some example methods, the mobile station 102 is configured with forward and/or backward compatibility, such that the mobile station 102 reports its capability to form the unified transmission framework to the wireless access node 104, such as after accessing, or being connected to, the network. Additionally, the mobile station 102 may receive one or more signals/commands from the wireless access node 104 that enables the function or ability of the mobile station 102 to form the unified transmission framework. In particular example methods, the mobile station 102 may report its capability to form the unified transmission framework to the wireless access node 104 by reporting at least one of: an indicator of supporting one or more communication parameter sets for both downlink transmissions and uplink transmissions; an indicator of supporting a transmission configuration indication (TCI) for a PUSCH; or an indicator of supporting a DCI command that includes a plurality of communication parameter set IDs.

Additionally, for at least some example methods where the uplink signal is a SRS, a PUSCH, or a PUCCH, the base station 102 enables transmission of the uplink signal according to the communication parameter set and the association by at least one of: not configuring the uplink signal with a spatial relation parameter; or not configuring the uplink signal with an uplink power control parameter. For at least some of these methods, the power control parameter comprises at least a path loss RS. Also, for at least some of these methods where the uplink signal comprises a PUSCH, and a SRS associated with the PUSCH is not configured with the path loss RS parameter. In addition or alternatively, where the uplink signal comprises a PUSCH, the SRS for non-codebook transmission or codebook transmission is not configured with a power control parameter. In addition or alternatively, for at least some of these methods, the base station 102 receives a RRC signal enabling it to transmit the uplink signal according to the communication parameter set and the association.

The description and accompanying drawings above provide specific example embodiments and implementations. The described subject matter may, however, be embodied in a variety of different forms and, therefore, covered or claimed subject matter is intended to be construed as not being limited to any example embodiments set forth herein. A reasonably broad scope for claimed or covered subject matter is intended. Among other things, for example, subject matter may be embodied as methods, devices, components, systems, or non-transitory computer-readable media for storing computer codes. Accordingly, embodiments may, for example, take the form of hardware, software, firmware, storage media or any combination thereof. For example, the method embodiments described above may be implemented by components, devices, or systems including memory and processors by executing computer codes stored in the memory.

Throughout the specification and claims, terms may have nuanced meanings suggested or implied in context beyond an explicitly stated meaning. Likewise, the phrase "in one embodiment/implementation" as used herein does not necessarily refer to the same embodiment and the phrase "in another embodiment/implementation" as used herein does not necessarily refer to a different embodiment. It is intended, for example, that claimed subject matter includes combinations of example embodiments in whole or in part.

In general, terminology may be understood at least in part from usage in context. For example, terms, such as "and", "or", or "and/or," as used herein may include a variety of meanings that may depend at least in part on the context in which such terms are used. Typically, "or" if used to associate a list, such as A, B or C, is intended to mean A, B, and C, here used in the inclusive sense, as well as A, B or C, here used in the exclusive sense. In addition, the term "one or more" as used herein, depending at least in part upon context, may be used to describe any feature, structure, or characteristic in a singular sense or may be used to describe combinations of features, structures or characteristics in a plural sense. Similarly, terms, such as "a," "an," or "the," may be understood to convey a singular usage or to convey a plural usage, depending at least in part upon context. In addition, the term "based on" may be understood as not necessarily intended to convey an exclusive set of factors and may, instead, allow for existence of additional factors not necessarily expressly described, again, depending at least in part on context.

Reference throughout this specification to features, advantages, or similar language does not imply that all of the features and advantages that may be realized with the present solution should be or are included in any single implementation thereof. Rather, language referring to the features and advantages is understood to mean that a specific feature, advantage, or characteristic described in connection with an embodiment is included in at least one embodiment of the present solution. Thus, discussions of the features and advantages, and similar language, throughout the specification may, but do not necessarily, refer to the same embodiment.

Furthermore, the described features, advantages and characteristics of the present solution may be combined in any suitable manner in one or more embodiments. One of ordinary skill in the relevant art will recognize, in light of the description herein, that the present solution can be practiced without one or more of the specific features or advantages of a particular embodiment. In other instances, additional features and advantages may be recognized in certain embodiments that may not be present in all embodiments of the present solution.

The following items refer to preferred embodiments:
1. A method for wireless communication, comprising:
   associating, by a first communication node, a least one of a power control parameter, a port parameter, or a first reference signal (RS) resource with a communication parameter set, the communication parameter set comprising at least a second RS resource and at least a quasi co-location (QCL) type parameter; and
   transmitting, by the first communication node, an uplink signal according to the communication parameter set and the association.
2. The method of item 1, further comprising:
   receiving, with the first communication node, an association command from a second communication node,
   wherein the associating comprises associating the at least one of the power control parameter, the port parameter, or the first RS resource with the communication parameter set in response to receiving the association command.
3. The method of item 1, wherein the associating comprises associating the first RS resource with the communication parameter set, and wherein the second RS resource comprises a synchronization signal (SS) block, a channel-state information reference signal (CSI-RS) resource, or a sounding reference signal (SRS) resource.
4. The method of item 1, wherein the uplink signal comprises a sounding reference signal (SRS), a physical uplink control channel (PUCCH), or a physical uplink shared channel (PUSCH).
5. The method of item 4, wherein the associating comprises associating the first RS resource with the communication parameter set, the method further comprising: in response to the uplink signal comprising the SRS or the PUCCH signal, ignoring the association between the communication parameter set and the first RS resource.
6. The method of item 4, wherein the associating comprises associating the port parameter with the communication parameter set, wherein in response to the uplink signal comprising the PUSCH, transmitting the PUSCH at one or more ports corresponding to the port parameter.
7. The method of item 6, wherein the port parameter comprises a number of PUSCH ports.
8. The method of item 1, wherein the power control parameter comprises a target power, a path loss RS, a scaling factor for path loss, or a closed loop process.
9. The method of item 1, further comprising: receiving a downlink signal according to the communication parameter set.
10. The method of item 9, wherein the downlink signal comprises a physical downlink control channel (PDCCH), a physical downlink shared channel (PDSCH), or a channel- state information reference signal (CSI-RS).
11. The method of item 1, wherein the first RS resource comprises a sounding reference signal (SRS) resource and wherein the method comprises at least one of:
   including a SRS resource identifier (ID) associated with the SRS resource in the communication parameter set;
   receiving a radio resource control (RRC) command or a medium access control control element (MAC-CE) command that identifies an association between the SRS resource and the communication parameter set;
   determining the SRS resource according to the second RS resource being the same between the communication parameter set and a spatial relation, or between the communication parameter set and a second communication parameter set of the SRS resource; or
   determining the SRS resource according to a same communication parameter set between the uplink signal and the SRS resource, and wherein the uplink signal comprises a physical uplink shared channel (PUSCH).
12. The method of item 11, wherein the SRS resource is configured with a usage of codebook or non-codebook.
13. The method of item 11, wherein the SRS resource is not configured with a usage or is configured with a usage other than a usage of codebook or non-codebook, if no SRS resource is configured with the usage of codebook or non-codebook.
14. The method of item 1, further comprising: determining at least one of a spatial relation or the power control parameter of the uplink signal according to the communication parameter set, wherein the uplink signal comprises a physical uplink control channel (PUCCH) or a sounding reference signal (SRS).
15. The method of item 14, wherein the PUCCH comprises a PUCCH resource or a PUCCH resource group.
16. The method of item 14, further comprising: determining the spatial relation of the uplink signal according to the second RS resource or the communication parameter set.
17. The method of item 1, further comprising: determining at least one of a spatial relation, the first RS resource, the port parameter, or the power control parameter of the uplink signal according to the communication parameter set, wherein the uplink signal comprises a physical uplink shared channel (PUSCH), and wherein the first RS resource comprises at least one sounding reference signal (SRS) resource.
18. The method of item 17, the method further comprising: determining a mapping between one or more PUSCH ports and one or more SRS ports of the at least one SRS resource of the communication parameter set.
19. The method of item 17, the method further comprising: including the port parameter for transmitting the PUSCH in the communication parameter set, wherein the communication parameter set does not comprise the SRS resource.
20. The method of item 1, further comprising:
   receiving a command comprising a medium access control control element (MAC-CE) command or a downlink control information (DCI) command; and
   determining the communication parameter set according to the command.
21. The method of item 20, wherein in response to the command comprising the MAC-CE command, the MAC-CE command comprises a MAC-CE command configured for physical downlink shared channel (PDSCH) transmission configuration indication (TCI) activation.
22. The method of item 20, wherein in response to the command comprising the DCI command, the DCI command comprises a DCI format 1_1, a DCI format 0_1 or a group common DCI command.
23. The method of item 1, further comprising:
   determining a plurality of communication parameter sets in response to a first command, wherein the plurality of communication parameter sets comprises the communication parameter set; and
   selecting at least the communication parameter set from among the plurality of communication parameter sets for transmitting the uplink signal in response to a second command.
24. The method of item 23, wherein the first command comprises a radio resource control (RRC) command or a first medium access control control element (MAC-CE) command, and wherein the second command comprises a downlink control information (DCI) command or a second MAC-CE command.
25. The method of item 23, wherein the plurality of communication parameter sets comprises at least one combination of one or more communication parameter sets, and wherein at least the communication parameter set comprises one of the at least one combination.
26. The method of item 1, further comprising:
   determining a plurality of communication parameter sets in response to a first command, wherein the plurality of communication parameter sets comprises the communication parameter set;
   determining a subset of the plurality of communication parameter sets in response to a second command from among the plurality of communication parameter sets; and
   selecting at least the communication parameter set from the subset for transmitting the uplink signal in response to a third command.
27. The method of item 26, wherein the subset comprises at least one combination of one or more communication parameter sets from the plurality of communication parameter sets, and wherein at least the communication parameter set comprises one of the at least the one combination.
28. The method of item 26, wherein at least one of: the first command comprises a radio resource control (RRC) command or a first medium access control control element (MAC-CE) command; the second command comprises a second MAC-CE command; or the third command comprises a downlink control information (DCI) command or a third MAC-CE command.
29. The method of item 26, wherein a communication parameter set of the plurality of communication parameter sets is associated with the power control parameter in response to the first command; and wherein a communication parameter set of the subset, or a combination of communication parameter sets of the subset, is further associated with at least one of a first RS resource or a port parameter in response to the second command.
30. The method of item 1, the method further comprising: determining a spatial relation for the first RS resource according to the associated communication parameter set.
31. The method of item 30, further comprising: activating the first RS resource transmission, when the first RS resource is a semi-persistent one.
32. The method of item 26, wherein a communication parameter set in the subset is associated with a respective one of a plurality of indexes, the method further comprising, at least one of:
   receiving a physical downlink control channel (PDCCH), a physical downlink shared channel (PDSCH), or a channel- state information reference signal (CSI-RS) according to a communication parameter set having an index that matches a predetermined index of a plurality of indexes.
33. The method of item 32, wherein the predetermined index comprises a lowest index of the plurality of entries, a highest index of the plurality of entries, a first index of the plurality of entries or a last index of the plurality of entries.
34. The method of item 33, wherein at least one of:
   a scheduling offset of the PDSCH is less than or equal to a threshold; and
   a scheduling offset of the CSI-RS is less than or equal to a threshold.
35. The method of item 26, wherein a communication parameter set in the subset is associated with one of a plurality of indexes, the method further comprising, at least one of:
   transmitting a physical uplink control channel (PUCCH), or a sounding reference signal (SRS) according to a communication parameter set having an index that matches a predetermined index or a combination having an index that matches a predetermined index.
36. The method of item 35, wherein the predetermined index comprises a lowest index of the plurality of entries, a highest index of the plurality of entries, a first index of the plurality of entries or a last index of the plurality of entries.
37. The method of item 35, wherein at least one of:
   the PUCCH is not configured with a spatial relation parameter or a path loss RS parameter, or the SRS is not configured with the spatial relation parameter or the path loss RS parameter.
38. The method of item 26, wherein the communication parameter set comprises a first communication parameter set of the subset, and wherein the uplink signal comprises a physical uplink shared channel (PUSCH), the method further comprising:
   selecting a second communication parameter set from the subset for receiving a physical downlink shared channel (PDSCH); and
   receiving the PDSCH according to the second communication parameter set.
39. The method of item 38, wherein at least one of:
   the first communication parameter set and the second communication parameter set are the same; and
   selecting the second communication parameter set comprises selecting the second communication parameter set in response to the third command.
40. The method of item 26, wherein the subset comprises a plurality of combinations, the combination comprising a first combination, and wherein the uplink signal comprises a physical uplink shared channel (PUSCH), the method further comprising:
   selecting a second combination from the subset for receiving a physical downlink shared channel (PDSCH); and
   receiving the PDSCH according to the second combination.
41. The method of item 40, wherein at least one of:
   the first combination and the second combination are the same; and
   selecting the second combination comprises selecting the second combination in response to the third command.
42. The method of item 1, further comprising:
   determining a plurality of communication parameter sets in response to a first command, wherein the plurality of communication parameter sets comprises the communication parameter set;
   determining a first subset of the plurality of communication parameter sets corresponding to a second command;
   determining a second subset of the plurality of communication parameter sets corresponding to a third command;
   selecting one or more communication parameter sets from the first or second subset for one or more uplink signals or one or more downlink signals.
43. The method of item 42, wherein the second command comprises a medium access control control element (MAC-CE) command and the third command comprises a downlink control information (DCI) command.
44. The method of item 1, further comprising:
   receiving a downlink control information (DCI) command comprising a plurality of communication parameter set identifiers (IDs), wherein a communication parameter set ID identifying one or more of a plurality of communication parameter sets; and
   determining the plurality of communication parameter set IDs based on an index identifying a position for the plurality of communication parameter set IDs in the DCI command or a number of the plurality of communication parameter set IDs.
45. The method of item 44, wherein the DCI command is cyclic redundancy checked (CRC) scrambled by a specific radio-network temporary identifier.
46. The method of item 1, further comprising:
   reporting to a second communication node by at least one of:
   an indicator of supporting a radio resource control (RRC) signal or a medium access control control element (MAC-CE) cross carrier component indicator;
   an indicator of supporting the communication parameter set for both downlink transmissions and uplink transmissions;
   an indicator of supporting a transmission configuration indication (TCI) for a physical uplink shared channel (PUSCH); or
   an indicator of supporting a downlink control information (DCI) command comprising a plurality of communication parameter set identifiers (IDs).
47. The method of item 1, wherein the uplink signal comprises at least one of a sounding reference signal (SRS), a physical uplink shared channel (PUSCH), or a physical uplink control channel (PUCCH), the method further comprising:
   enabling the transmitting of the uplink signal according to the communication parameter set and the association by at least one of:
   not configuring the uplink signal with a spatial relation parameter; or
   not configuring the uplink signal with an uplink power control parameter.
48. The method of item 47, wherein the uplink power control parameter comprises at least a path loss RS.
49. The method of item 47, wherein the uplink signal comprises the PUSCH, and wherein the second SRS associated with the PUSCH is not configured with the path loss RS parameter.
50. The method of item 47, wherein the uplink signal comprises the PUSCH, and wherein the SRS for non-codebook transmission or codebook transmission is not configured with a power control parameter.
51. The method of item 1, further comprising:
   receiving a radio resource control (RRC) signal enabling transmitting the uplink signal according to the communication parameter set and the association.
52. A method for wireless communication, the method comprising:
   transmitting, by a second communication node to a first communication node, a command to associate at least one of a power control parameter, a port parameter, or a first reference signal (RS) resource with a communication parameter set, the communication parameter set comprising at least a second RS resource and at least a quasi-co-location (QCL) type parameter; and
   receiving, from the first communication node, an uplink signal according to the communication parameter set and the association.
53. A wireless communications apparatus comprising a processor and a memory, wherein the processor is configured to read code from the memory and implement a method recited in any of items 1 to 52.
54. A computer program product comprising a computer-readable program medium code stored thereupon, the code, when executed by a processor, causing the processor to implement a method recited in any of items 1 to 52.

## Claims

1. A method for wireless communication, the method comprising:
determining, by a mobile device, a plurality of communication parameter sets in response to a radio resource control, RRC, command, wherein at least one of the plurality of communication parameter sets is associated with a power control parameter;
determining by a mobile device, a subset of the plurality of communication parameter sets in response to a medium access control control element, MAC-CE, command;
selecting, by the mobile device, a communication parameter set from the subset for transmitting an uplink signal in response to a downlink control information, DCI, command;
transmitting, by the mobile device, the uplink signal to a wireless access node according to the selected communication parameter set; and
receiving, by the mobile device, a downlink signal from the wireless access node according to the selected communication parameter set.

2. A method for wireless communication, the method comprising:
transmitting, by a wireless access node, a radio resource control, RRC, command to a mobile device for the mobile device to determine a plurality of communication parameter sets;
transmitting, by the wireless access node, a medium access control control element, MAC-CE, command to the mobile device for the mobile device to determine a subset of the plurality of communication parameter sets;
transmitting, by the wireless access node, a downlink control information, DCI, command to the mobile device for the mobile device to select a communication parameter set from the subset for transmitting an uplink signal;
receiving, by the wireless access node, the uplink signal from the mobile device according to the selected communication parameter set; and
transmitting, by the wireless access node, a downlink signal to the mobile device according to the selected communication parameter set.

3. The method of claims 1 or 2, wherein each communication parameter set of the plurality of communication parameter sets comprises a respective set of one or more reference signal, RS, resources and a corresponding set of one or more quasi co-location, QCL, type parameters.

4. The method of claim 3, wherein the one or more QCL parameters comprise one or more of: a Doppler spread, a Doppler shift, a delay spread, an average delay, an average gain, or a spatial parameter.

5. The method of claims 3 or 4, wherein the one or more RS resources comprises a second type of RS resource comprising a target RS resource or a target channel resource to provide a spatial relation or spatial relation information for a signal to be communicated between two communication nodes.

6. The method of claims 1 or 2, wherein the at least one of the plurality of communication parameter sets is associated with the power control parameter by the power control parameter or an identifier, ID, of the power control parameter being included in the at least one of the plurality of communication parameter sets or in one or more entries of a data structure of the at least one of the plurality of communication parameter sets, or by the ID of the power control parameter being linked with the at least one of the plurality of communication parameter sets or an ID of the at least one of the plurality of communication parameter sets.

7. The method of claims 1 or 2, wherein the downlink signal comprises a physical downlink control channel, PDCCH, a physical downlink shared channel, PDSCH, or a channel state information reference signal, CSI-RS.

8. The method of claim 1, further comprising:
reporting, by the mobile device, to the wireless access node by at least one of:
an indicator of supporting a MAC-CE cross carrier component indicator;
an indicator of supporting the selected communication parameter set for both downlink transmissions and uplink transmissions; or
an indicator of supporting a DCI command comprising a plurality of communication parameter set identifiers, IDs.

9. The method of claim 2, further comprising:
receiving, by the wireless access node, a report from the mobile device by at least one of:
an indicator of supporting a MAC-CE cross carrier component indicator;
an indicator of supporting the selected communication parameter set for both downlink transmissions and uplink transmissions; or
an indicator of supporting a DCI command comprising a plurality of communication parameter set identifiers, IDs.

10. A wireless communications apparatus comprising a processor and a memory, wherein the processor is configured to read code from the memory to perform a method recited in any of claims 1 to 9.
